Europäisches Patentamt

European Patent Office

Office européen des brevets

(11) Numéro de publication: **0 090 122**
**A2**

(12) ## DEMANDE DE BREVET EUROPEEN

(21) Numéro de dépôt: **82401006.0**

(51) Int. Cl.³: **F 02 B 37/12**

(22) Date de dépôt: **02.06.82**

(30) Priorité: **29.03.82 FR 8205293**

(71) Demandeur: **RENAULT SPORT, 1/15, Avenue du Président Kennedy, F-91170 Viry-Chatillon (FR)**

(43) Date de publication de la demande: **05.10.83 Bulletin 83/40**

(72) Inventeur: **Boudy, Jean-Pierre, 2, rue des Pâtis, F-91540 Mennecy (FR)**

(74) Mandataire: **Réal, Jacques et al, Régie Nationale des Usines Renault 8-10, avenue Emile Zola, F-92109 Boulogne-Billancourt (FR)**

(84) Etats contractants désignés: **AT BE CH DE GB IT LI NL SE**

(54) **Dispositif de régulation de l'alimentation d'un moteur à combustion interne.**

(57) Dispositif de régulation de l'alimentation en air d'un moteur à combustion interne suralimenté par un ensemble turbo-compresseur entraîné en rotation par les gaz d'échappement du moteur.

L'admission (15, 34) du compresseur rotatif (13) est contrôlée par un système de vannage d'entrée (32, 33) apte à réduire l'effet de compression du rotor (7) du compresseur (13), la commande (36) de ce vannage (32, 33) étant couplée avec celle du levier d'accélérateur (29) pour fermer le vannage et réduire au maximum l'effet de compression lorsque le levier (29) se déplace vers la position de ralenti du moteur.

Application à la régulation de la vitesse du rotor d'un turbo-compresseur, en particulier au cours de la marche au ralenti du moteur et au moment des reprises d'accélération.

1

## DISPOSITIF DE REGULATION DE L'ALIMENTATION
## D'UN MOTEUR A COMBUSTION INTERNE

La présente invention concerne un dispositif de régulation de l'alimentation en air d'un moteur à combustion interne suralimenté par un ensemble turbo-compresseur entraîné en rotation par les gaz d'échappement du moteur. L'invention s'applique, en particulier, aux moteurs à allumage commandé fonctionnant à l'essence de pétrole ou avec d'autres carburants vaporisables et pour lesquels l'admission de l'air, à l'entrée des chambres de combustion du moteur, est susceptible d'être étranglée par un organe de réglage tel qu'au moins un papillon de réglage contrôlé par un levier d'accélérateur, placé en aval du compresseur.

Un inconvénient de cette disposition se manifeste à la reprise d'accélération après une phase de marche au ralenti. Le rotor du turbo-compresseur tourne alors à vitesse relativement limitée et sa remontée en vitesse nécessite plusieurs secondes d'accélération sous l'effet du débit d'échappement encore limité du moteur.Du tout début de la remontée en vitesse du rotor du turbo-compresseur, le rotor du compresseur, qui tourne à faible vitesse, au lieu de fournir une surpression, fonctionne comme un organe de perte de charge placé sur le circuit d'alimentation en air du moteur, ce qui contribue encore à réduire le débit d'air aspiré à la reprise du moteur à pleine ouverture du papillon de réglage de l'alimentation en air du moteur. Ce n'est qu'après une remontée sensible de la vitesse du turbo que la pression d'alimentation en air du moteur peut dépasser la pression atmosphérique et provoquer ainsi une augmentation sensible du débit des gaz d'échappement qui permette d'accélérer alors rapidement le rotor du turbo-compresseur jusqu'à sa vitesse de régime maximal qui garantit une nette surpression à l'alimentation du moteur.

L'un des buts de la présente invention est précisément de réduire le temps de réponsa à l'accélération des moteurs à l'allumage commandé et à suralimentation par turbo-compresseur lorsque l'on compare leurs performances de changement de régime et surtout de reprise avec celles que réalisent les moteurs à aspiration naturelle de mêmes caractéristiques.

A cet effet, le dispositif de régulation de l'alimentation en air d'un moteur à combustion interne suralimenté par un ensemble turbo-compresseur entraîné en rotation par les gaz d'échappement du moteur,du type dans lequel l'admission de l'air à l'entrée des chambres de combustion du moteur est susceptible d'être étranglée par un organe de réglage tel qu'au moins un papillon de réglage contrôlé par le levier d'accélérateur du moteur,est caractérisé en ce que l'admission du compresseur rotatif est contrôlée par un système de vannage d'entrée apte à réduire l'effet de compression du rotor du compresseur, la commande de ce vannage étant couplée avec celle du levier d'accélérateur pour fermer ce vannage et réduire au maximum l'effet de compression lorsque le levier d'accélérateur se déplace vers la position de ralenti du moteur de manière à diminuer alors la puissance consommée par le compresseur et à maintenir le rotor de l'ensemble de l'ensemble turbine-compresseur à vitesse élevée pour réduire le retard à la montée en vitesse de ce rotor au cours de la montée en puissance du moteur tout en permettant une coupure rapide de la puissance du moteur par étranglement au niveau de l'organe de réglage de l'admission du moteur. Le système de vannage est généralement constitué d'une série d'ailettes disposées dans le passage annulaire d'alimentation du compresseur et agencées chacune pour tourner sur un axe en couplage mécanique avec le levier d'accélérateur de manière à se placer dans le sens de l'écoulement radial d'entrée de l'air à pleine accélération du moteur et à mettre l'air à l'admission au compresseur en rotation dans le sens diminuant la pression de refoulement du compresseur.

Selon un autre mode de réalisation de l'invention, le couplage de la commande du système de vannage avec le levier d'accélérateur est réalisé par une liaison mécanique qui comporte des moyens sensibles au déplacement du levier d'accélérateur et des moyens sensibles à la pression de l'air à l'admission dans le moteur en aval du compresseur, aptes à interdire l'ouverture en grand du système de vannage aussi longtemps que cette pression d'air à l'admission dans le moteur est inférieure à une valeur prédéterminée correspondant à une surpression significative.

La liaison mécanique peut comporter un corps de cylindre solidaire d'une tige d'accélérateur et contenant un piston relié mécaniquement à la commande du système de vannage et soumis, d'un côté et dans le sens de l'ouverture du vannage, à la pression d'admission de l'air à l'entrée du moteur en aval de l'organe de réglage et de l'autre côté à la force de réaction d'un ressort de rappel et à la pression atmosphérique ou à la pression à l'entrée du compresseur de telle manière que le ressort de rappel limite l'ouverture du vannage en l'absence d'une surpression significative à l'admission du moteur et que des surpressions croissantes à l'admission du moteur provoquent une ouverture croissante du vannage jusqu'à sa pleine ouverture.

Selon un premier mode de réglage du système selon l'invention, en position de marche au ralenti du moteur, l'organe de réglage d'air

3

contrôlé par le levier d'accélération est réglé pour fermer seulement partiellement, l'admission de l'air à l'entrée du moteur tandis que le couplage du levier d'accélération avec la commande du système de vannage est réglé pour provoquer une forte obturation de ce vannage, de manière à permettre au rotor du groupe moto-compresseur de tourner à vitesse relativement élevée pendant la marche au ralenti du moteur où la perte de charge à l'admission est provoquée, pour la plus grande partie, à la traversée du compresseur.

Selon un autre mode de réglage encore plus souple du système de régulation d'air conforme à l'invention, en position de marche au ralenti du moteur, le couplage du levier d'accélérateur avec la commande du vannage constituée d'une série d'ailettes disposées dans le passage annulaire d'alimentation du compresseur, est réglé pour provoquer une forte mise en rotation de l'air à l'admission au compresseur dans le sens d'entraînement en rotation du rotor de ce compresseur de manière à faire entraîner en rotation au moins partiellement le rotor du compresseur et à permettre ainsi à ce rotor de tourner plus vite pendant la marche au ralenti du moteur tout en costituant avec l'organe de réglage une perte de charge à l'admission apte a produire l'étranglement de l'admission en air du moteur correspondant à la marche au ralenti ou à puissance réduite.

Le dispositf de régulation de l'alimentation en air selon l'invention est plus spécialement applicable aux moteurs à allumage commandé qui présentent des difficultés d'adaptation du turbo-compresseur de suralimentation au régime d'admission avec étranglement du débit d'air à l'entrée du moteur, soit direct dans le cas de l'injection du carburant, soit à travers un carburateur. En effet, pour les moteurs à cycle diésel, l'aspiration de l'air est étranglée seulement par les pertes de charge dans le circuit d'admission toujours ouvert en grand et le moteur dispose toujours d'une pression d'échappement significative qui assure un régime de rotation minimal important du rotor du turbo-compresseur. Par contre, pour les moteurs à allumage commandé, la pression d'admission peut, par étranglement au carburateur, devenir très faible (jusqu'à des valeurs inférieures à 0,2 bar) et donner des pression d'échappement après détente qui sont à peine supérieures à la pression atmosphérique (la pression de combustion est cependant nettement supérieure à la pression atmosphérique pour assurer la rotation du moteur) et n'assurent même plus la rotation du rotor du turbo-compresseur.

Le dispositif selon l'invention permet de maintenir le rotor du

4

turbo en rotation à vitesse relativement élevée même au régime de ralenti du moteur en augmentant la pression d'échappement et en utilisant une partie de l'énergie d'aspiration du moteur pour, en quelque sorte, faire fonctionner le rotor de compresseur en turbine sous l'effet de la dépression d'aspiration du moteur. Un tel système risque de majorer un peu la consommation au ralenti du moteur mais améliore grandement la souplesse du moteur et son économie d'usage en service.

D'autres buts, avantages et caractéristiques de l'invention apparaîtront à la lecture de la description d'un mode de réalisation de l'invention faite à titre non limitatif et en regard du dessin annexé où:

- la Fig. 1 représente en coupe schématique le dispositif de régulation et d'alimentation en air d'un moteur à combustion interne, notamment d'un moteur à allumage contrôlé, doté d'un turbocompresseur entraîné par l'échappement du moteur et régulé selon l'invention;
- la Fig. 2 est un graphique illustrant la pression P, obtenue à l'admission du moteur, en fonction de l'angle de rotation α de la série d'ailettes disposées à l'admission du compresseur.

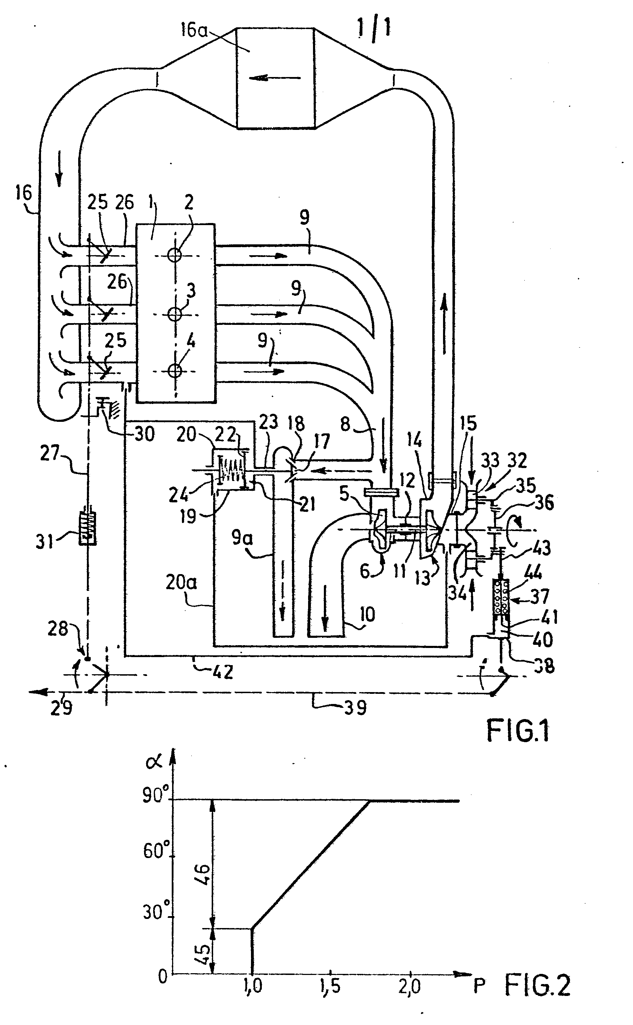

Selon le schéma de la figure 1, le moteur 1 à trois cylindres 2, 3, 4, est équipé d'une installation de suralimentation en air constituée d'une turbine centrifuge 6 dont le rotor 5, logé à l'intérieur d'une volute, est placé sur le trajet des gaz d'échappement d'un conduit 8 d'amenée à la turbine relié à des pipes d'échappement 9 branchées directement sur la sortie des soupapes d'échappement du moteur. L'entrée de la turbine 6 est radiale et l'écoulement centripète des gaz d'échappement aboutit à une sortie axiale reliée à un conduit d'échappement 10 proprement dit. Le rotor de turbine 5 est relié par un arbre 11 supporté par un palier 12 généralement lubrifié par la pression d'huile du moteur, à un rotor 7 d'un compresseur 13 logé dans une volute 14 et relié par une conduite d'entrée 15 à des moyens d'entrée d'air constitués , selon l'invention, par un distributeur de réglage 32.

Le rotor 7 du compresseur, entraîné en rotation par le rotor de turbine 5, aspire l'air de combustion du moteur axialement et le refoule radialement selon un écoulement centrifuge vers un collecteur d'admission 16 qui débouche sur l'entrée des soupapes d'admission des cylindres 2 à 4 après refroidissement de l'air comprimé dans un échangeur de chaleur 16a.

Afin de limiter la pression d'admission dans le collecteur 16 et dans la chambre de combustion des cylindres 2 à 4 et, par voie de conséquence, la pression maximale de combustion s'exerçant sur les pistons du moteur dans le cas d'un moteur diésel et, respectivement, le risque de cliquetis dans le cas d'un moteur à allumage commandé, le circuit de la turbine 6 est muni d'un système de dérivation constitué d'un clapet de décharge 17 en appui sur un siège conique 18. Le clapet 17 en se décollant du siège 18 ouvre un passage annulaire qui permet aux gaz d'échappement de se décharger directement des pipes d'échappement 9 dans un conduit de décharge 9a en court-circuitant le passage de ces gaz le long des ailettes du rotor 5 de turbine 6. Le débit de gaz d'échappement à travers la turbine 6 est ainsi réduit, ce qui diminue considérablement la vitesse de rotation des rotors 5 et 7 et, par conséquent, la pression de refoulement du compresseur 13 dans le collecteur d'admission 16.

La régulation de la pression d'air dans le collecteur d'admission 16 peut être obtenue à l'aide d'une capsule de régulation 19 qui comporte deux chambres 20 et 21 séparées par un piston 22, généralement du type à membrane pour obtenir une étanchéité parfaite et une faible hystérésis de fonctionnement. La chambre 21 est reliée au collecteur d'admission 16 en aval du compresseur 13 et la pression d'air de suralimentation régnant dans cette chambre 21 agit sur le piston 22, relié par une tige 23 au clapet de décharge 17, à l'encontre d'un ressort hélicoïdal 24 logé dans la chambre 20. Lorsque la pression dans le collecteur 16 à l'aval du compresseur 13 et agissant sur le piston 22 dépasse le tarage du ressort 24, le clapet 17 se décolle de son siège 18 et un débit de gaz d'échappement croissant se décharge directement dans le conduit 9a, ce qui réduit la vitesse des rotors de turbine 5 et de compresseur 7 et stabilise immédiatement la pression de suralimentation dans le collecteur d'admission 16, car la chambre 20 est reliée à l'atmosphère, ou mieux par un conduit 20a au collecteur d'admission au compresseur 13, c'est-à-dire portée à une pression inférieure à la pression atmosphérique.

Des moyens de régulation supplémentaires de l'admission de l'air sont prévus selon l'invention pour assurer, lorsque le moteur 1 est à allumage commandé, une vitesse de rotation maximale du rotor 5, 11, 7 du turbo-compresseur lorsque le moteur est au régime du ralenti ou marche à puissance réduite.

Ces moyens supplémentaires comportent un papillon de réglage 25 à l'entrée de chacune des pipes d'admission 26 des cylindres 2 à 4 du moteur 1. Ces papillons de réglage sont actionnés de préférence par une tringlerie 27 reliée par un jeu de leviers 28 à une commande automatique ou manuelle telle qu'une pédale ou un levier d'accélérateur 29. Une butée

6

réglable 30 est interposée sur la tringlerie 27 pour empêcher la fermeture totale des papillons de réglage 25 et un organe élastique tel qu'un
pot à ressort 31 interposé sur la tringlerie 27 permet aux leviers 28 de
continuer leur rotation lorsque les papillons 25 sont en butée d'ouverture ou de fermeture partielle sur la butée 30.

Selon l'invention, l'air aspiré par le compresseur 13 traverse
un distributeur à prérotation 32 dont les ailettes orientables 33 sont disposées dans un passage annulaire d'entrée 34 et sont montées rotatives
chacune sur un axe 35. Les axes 35 du distributeur 32 sont couplés par un
cercle de vannage 36 commandé par un vérin d'actionnement mécanopneumatique 37. Le corps 38 du vérin 37 est relié mécaniquement par une tringlerie
39 aux leviers 28 tandis qu'une chambre intérieure 40 du vérin 38,
délimitée par un piston 41, est reliée par une conduite 42 à l'une des
pipes d'admission 26 en aval du papillon de réglage correspondant 25. Le
piston 41 est relié par sa tige 43 au cercle de vannage 36 et est
rappelé vers le fond du corps du cylindre 38 par un ressort
de rappel 44.

Le fonctionnement du dispositif de régulation selon l'invention va
maintenant être explicité.

Lorsque le moteur 1 est à pleine charge, les papillons 25 à l'entrée du moteur sont ouverts en grand, de même que les ailettes 33 qui sont
repoussées en position d'ouverture à la fois par la tringlerie 39 et par
la pression de suralimentation amenée par la conduite 42 dans la chambre
40 du vérin 37 et qui agit sur le piston 41 à l'encontre du ressort de
rappel 44.

La pression de suralimentation est régulée à sa valeur maximale
admissible pour éviter le cliquetis du moteur 1 grâce au clapet 17 qui
s'ouvre lorsque la pression dans le collecteur 16 dépasse le tarage du
ressort 24.

Lorsque le conducteur du véhicule équipé du moteur 1 lève brutalement le pied de l'accélérateur 29, les papillons de réglage 25 sont repoussés brutalement en position de fermeture partielle, la pression dans
la conduite 42 diminue brutalement et le vérin 37 rappelle le cercle de
vannage 36 vers la position de fermeture qui incline très fortement les
ailettes 33 qui mettent en rotation l'air d'admission vers le rotor 7 du
compresseur dans le sens de rotation du rotor de ce compresseur qui fonctionne alors partiellement en turbine sous l'effet de l'aspiration du
moteur 1.

. 7

La perte de charge provoquée par le fonctionnément du compresseur 13 en turbine fait chuter rapidement le débit d'air à l'admission du moteur 1 qui passe rapidement en frein-moteur et, le cas échéant, au régime de ralenti. La vitesse des rotors 5, 11 et 7 du turbo-compresseur diminue d'une façon limitée, en particulier lorsque le moteur fonctionne en frein-moteur et de toute façon la chute de régime du rotor de turbo est nettement moins rapide que dans le cas où l'admission du compresseur n'est pas soumise à un vannage d'entrée.

La fermeture du vannage du distributeur 32 est d'autant plus forte que la pression dans la chambre 40 du vérin 38 est plus faible, la pression la plus faible étant obtenue lorsqu'un régime de frein-moteur s'est établi , les rotors de compresseur 7 et de turbine 5 fonctionnant alors en étranglement d'admission et respectivement d'échappement pour procurer le couple de retenue maximale sur le moteur.

Les résultats les plus spectaculaires du dispositif selon l'invention sont obtenus à la réaccélération du moteur, par exemple en sortie de virage  après une phase de frein-moteur. Le rotor  du turbo-compresseur entraîné par l'aspiration du moteur agissant sur le rotor de compresseur 7 et le refoulement des gaz d'échappement agissant sur le rotor de turbine 5, tourne encore à vitesse relativement élevée. Dès la reprise de l'accélération, les papillons 25 à l'entrée des pipes d'admission sont ouverts en grand mais la surpression dans le collecteur 16 est encore inexistante. Le vérin 37 provoque donc, par commande mécanique seulement, une ouverture faible des ailettes 33, représentée sur la zone 45 du graphique de la figure 2. Le rotor 7 du compresseur 13 est alors peu freiné par le débit d'air aspiré par le moteur et qui le traverse,alors que le rotor de turbine 5 est accéléré par les gaz d'échappement refoulés déjà à un débit important. Le rotor de turbo 5, 11, 7 accé ère très rapidement et se maintient à un régime élevé tandis que, sous l'effet de la montée en pression au collecteur 16 et dans la chambre 40 du vérin 37, les ailettes 33 viennent progressivement se disposer sur la zone 46 de la figure 2 en position radiale pour autoriser la pleine pression de compression au compresseur 13. La remontée en puissance du moteur est beaucoup plus rapide que dans les systèmes d'admission directe au compresseur sans mise en rotation de l'air d'entrée pour réduire la puissance consommée au compresseur avant la montée effective en pression au collecteur c'admission.

Cette propriété est d'autant plus appréciée que la présence de l'échangeur 16a, formant refroidisseur, augmente le volume d'air stocké entre le compresseur 13 et l'admission des cylindres ainsi que les pertes de charge entre le compresseur 13 et les cylindres 2 à 4. On doit noter également que l'échangeur de chaleur 16a, notamment lorsqu'il s'agit d'un échangeur air-eau, peut servir également à réchauffer l'air admis dans les cylindres lorsque cet air est soumis à une forte baisse de pression qui a abaissé sa température par détente avec travail à travers le rotor de compresseur 7 fonctionnant en turbine. Dans une telle situation, le rotor de turbine 5 peut fonctionner en pompe d'extraction des gaz d'échappement entraîné par le rotor de compresseur 7 jouant le rôle de turbine.

Dans le cas de marche du moteur à puissance moyenne stabilisée, les papillons 25 du moteur sont placés presque en position de pleine ouverture mais les ailettes 33 du distributeur 32 ne viennent pas en position de pleine ouverture car la tringlerie ne peut pas encore les rappeler dans cette position réservée à la pleine puissance du moteur. La légère mise en rotation de l'air à l'admission du rotor 7 du compresseur permet à ce rotor d'atteindre une vitesse de rotation qui peut être supérieure à sa vitesse nominale en pleine charge. Cette disposition réduit à une valeur imperceptible par le conducteur le temps de réponse du moteur 1 à l'ouverture en grand de l'accélérateur telle qu'on l'utilise par exemple pour engager une opération de dépassement d'un autre véhicule.

Le dispositif de réglage de puissance selon l'invention pour un moteur à allumage commandé et à turbo-compresseur d'alimentation permet de bénéficier de nombreux avantages par rapport aux réglages selon l'art antérieur, parmi lesquels on peut citer:

- un meilleur dosage du débit d'air et de la puissance du moteur, par les papillons d'entrée des cylindres, d'où il en résulte une souplesse accrue du moteur,
- une diminution du temps de réponse à la coupure des gaz et surtout à la réaccélération, en particulier depuis une ouverture partielle ou la position de frein-moteur,
- de meilleures possibilités de dosage du mélange air-essence en utilisant l'angle d'ouverture des papillons d'entrée des cylindres comme paramètre, c'est-à-dire en utilisant , le cas échéant, un carburateur de type classique,
- un meilleur contrôle du régime du turbo-compresseur qui, en régime de ralenti prolongé, ne risque plus de s'arrêter.
- un meilleur frein-moteur.

Bien entendu, la présente invention n'est pas limitée aux modes de

0090122

9

réalisation décrits et représentés et elle est susceptible de nombreuses variantes accessibles à l'homme de l'art, sans que l'on ne s'écarte de l'esprit de l'invention.

Ainsi les papillons d'entrée moteur peuvent être remplacés par des guillotines ou tout autre dispositif de vannage. Le distributeur à ailettes orientables peut être remplacé par tout autre dispositif permettant d'induire une prérotation variable en fonction de l'ouverture tel qu' une grille d'aubes de turboréacteur.

On peut également imaginer de remplacer les commandes mécaniques et pneumatiques du distributeur à prérotation variable par un dispositif tenant compte du débit d'air du moteur, notamment électronique et utilisant comme paramètres:

- le régime du moteur,
- la pression d'admission,
- la pression d'échappement,
- la température d'admission,
- l'ouverture des papillons à l'entrée du moteur,
- le régime de rotation du turbo-compresseur.

10

REVENDICATIONS

1.- Dispositif de régulation de l'alimentation en air d'un moteur à combustion interne suralimenté par un ensemble turbo-compresseur entraîné en rotation par les gaz d'échappement du moteur, du type dans lequel l'admission de l'air à l'entrée des chambres de combustion du moteur est susceptible d'être étranglée par un organe de réglage tel qu'au moins un papillon de réglage contrôlé par le levier d'accélérateur du moteur caractérisé en ce que l'admission (15, 34) du compresseur rotatif (13) est contrôlée par un système de vannage d'entrée (32, 33) apte à réduire l'effet de compression du rotor (7) du compresseur (13), la commande de ce vannage étant couplée avec celle du levier d'accélérateur (29), pour fermer le vannage (32, 33) et réduire au maximum l'effet de compression lorsque ce levier d'accélérateur (29) se déplace vers la position de ralenti du moteur (1), de manière à diminuer alors la puissance consommée par le compresseur (13) et à maintenir le rotor (5, 11, 7) de l'ensemble turbine-compresseur (6, 13) à vitesse élevée pour réduire le retard à la montée en vitesse de ce rotor (5, 11, 7) au cours de la montée en puissance du moteur (1), tout en permettant une coupure rapide de la puissance du moteur (1) par étranglement au niveau de l'organe de réglage (25) de l'admission du moteur (1).

2.- Dispositif selon la revendication 1, caractérisé en ce que le système de vannage (32) est constitué d'une série d'ailettes (33) disposées dans le passage annulaire d'alimentation (34) du compresseur (13) et agencées chacune pour tourner sur un axe (35) en couplage mécanique (36) avec le levier d'accélérateur (29) de manière à se placer dans le sens de l'écoulement radial d'entrée de l'air à pleine accélération du moteur et à mettre l'air à l'admission au compresseur (13) en rotation dans le sens diminuant la pression de refoulement de ce compresseur (13).

3.- Dispositif selon l'une des revendications 1 ou 2, caractérisé en ce que le couplage de la commande du système de vannage (32) avec le levier d'accélérateur (29) est réalisé par une liaison mécanique à fluide qui comporte des moyens (38, 39) sensibles au déplacement du levier d'accélérateur et des moyens (40, 41) sensibles à la pression de l'air à l'admission dans le moteur (1) en aval de l'organe de réglage (25), aptes à interdire l'ouverture en grand du système de vannage (32, 33) aussi longtemps que cette pression d'air à l'admission dans le moteur (1) est inférieure à une valeur prédéterminée correspondant à une surpression significative.

4.- Dispositif selon la revendication 3, caractérisé en ce que la liaison à fluide (37) comporte un corps de cylindre (38) solidaire d'une tige d'accélérateur (39) et contenant un piston (41) relié mécaniquement à la commande (36) du système de vannage et soumis, d'un côté et dans le sens de l'ouverture du vannage, à la pression d'admission de l'air à l'entrée (26) du moteur (1) en aval de l'organe de réglage, et de l'autre côté à la force de réaction d'un ressort de rappel (44) et à la pression atmosphérique ou à la pression à l'entrée du compresseur de telle manière que le ressort de rappel (44) limite l'ouverture du vannage (32) en l'absence d'une surpression significative à l'admission (26) du moteur (1) et que des surpressions croissantes à l'admission (26) du moteur (1) provoquent une ouverture croissante du vannage (33, 32) jusqu'à sa pleine ouverture.

5.- Dispositif selon l'une des revendications 1 à 4, caractérisé en ce que, en position de marche au ralenti du moteur (1), l'organe de réglage (25) contrôlé par le levier d'accélérateur (29) est réglé pour ne fermer que partiellement l'admission de l'air à l'entrée (26) du moteur (1), tandis que le couplage (39, 37) du levier d'accélérateur (29) avec la commande (36) du système de vannage (32, 33) est réglé pour provoquer une forte obturation de ce vannage (32, 33), de manière à permettre au rotor (5, 11, 7) du groupe moto-compresseur (6, 13) de tourner à vitesse relativement élevée pendant la marche au ralenti du moteur (1) où la perte de charge à l'admission est provoquée, pour la plus grande partie, à la traversée du compresseur (13).

6.- Dispositif selon l'une des revendications 2 à 5, caractérisé en ce que, en position de marche au ralenti du moteur (1), le couplage (39, 37) du levier d'accélérateur (29) avec la commande (36) du vannage (32, 33) constitué d'une série d'ailettes (33) disposées dans le passage annulaire (34) d'alimentation du compresseur (13), est réglé pour provoquer une forte mise en rotation de l'air à l'admission (34) au compresseur (13) dans le sens d'entraînement en rotation du rotor (7) de ce compresseur (13), de manière à faire entraîner en rotation au moins partiellement le rotor (7) du groupe compresseur (13) et à permettre ainsi à ce rotor (7) de tourner plus vite pendant la marche au ralenti du moteur (1) tout en costituant avec l'organe de réglage (25) une perte de charge à l'admission (16) apte à produire l'étranglement de l'alimentation en air du moteur (1) correspondant à la marche au ralenti ou à puissance réduite.

1/1

FIG.1

FIG.2